# EUROPÄISCHE PATENTSCHRIFT

(11) **EP 0 995 044 B1**
(45) Veröffentlichungstag und Bekanntmachung des Hinweises auf die Patenterteilung: **12.01.2005**
(21) Anmeldenummer: 99934487.2
(22) Anmeldetag: 12.05.1999
(51) Int. Cl.: F16B 35/04, B62D 1/16

(54) **BEFESTIGUNGSSYSTEM ZUR FESTLEGUNG EINER KRAFTFAHRZEUGLENKSÄULENEINHEIT**
FASTENING SYSTEM FOR FIXING A MOTOR VEHICLE STEERING-COLUMN UNIT
SYSTEME DE FIXATION POUR POSITIONNER UN ENSEMBLE COLONNE DE DIRECTION DE VEHICULE AUTOMOBILE

(30) Priorität: 14.05.1998 DE 19821646
(43) Veröffentlichungstag der Anmeldung: 26.04.2000
(73) Patentinhaber: NACAM Deutschland GmbH, 49448 Lemförde (DE)
(72) Erfinder: MICHALSKI, Herniu, D-28816 Brinkum (DE); METZGER, Fabian, D-27751 Dlemenhorst (DE); VORTMEYER, Jens, D-32361 Preussisch-Oldendorf (DE); RUMPKE, Andreas, D-49453 Rehden (DE)
(86) Internationale Anmeldenummer: PCT/DE1999/001435
(87) Internationale Veröffentlichungsnummer: WO 1999/060280

(56) Entgegenhaltungen:
- EP-A- 0 309 344
- EP-A- 0 571 834
- EP-A- 0 774 399
- US-A- 4 671 324
- US-A- 4 900 178

## Beschreibung

Die Erfindung betrifft eine Befestigungsvorrichtung zur Festlegung einer Kraftfahrzeuglenksäulenbaueinheit.

Derartige Befestigungsvorrichtungen werden beispielsweise eingesetzt, um vormontierte Lenksäulenbaueinheiten an der Karosserie eines Kraftfahrzeuges im Rahmen der Endmontage festzulegen. Hierbei werden bei der Vormontage einer Lenksäulenbaueinheit eine oder mehrere Befestigungsschrauben jeweils in ein vorzugsweise am Gehäuse der Lenksäulenbaueinheit befestigtes Vormontagegewinde eingeschraubt. Dies hat den Vorteil, daß bei der Endmontage der Lenksäulenbaueinheit an der Karosserie keine einzelnen Befestigungsbauelemente zusätzlich bereitgestellt werden müssen. Ist die Lenksäulenbaueinheit im Verlauf der Endmontage an der Karosserie in ihre endgültige Position gebracht, so werden die Befestigungsschrauben in ein zweites Befestigungsgewinde eingeschraubt. Dieses Befestigungsgewinde kann sich sowohl direkt an der Karosseriestruktur eines Kraftfahrzeuges oder aber ebenfalls in Verlängerung des Vormontagegewindes an dem Lenksäulengehäuse befinden. Im letztgenannten Fall wird die Lenksäulenbaueinheit durch eine zwischen Vormontagegewinde und Befestigungsgewinde angeordnete karosserieseitige Lasche geklemmt. Beide Gestaltungen der Befestigung machen es erforderlich, daß die Befestigungsschraube mit ihrem Gewinde entweder das Vormontagegewinde verlassen haben muß, bevor die Schraube mit ihren ersten Gewindegängen in das Befestigungsgewinde eintritt oder das Vormontagegewinde wird beim Eintritt der Befestigungsschraube in das Befestigungsgewinde überbrochen, daß heißt zerstört.

Beide beschriebenen Montagevarianten weisen im Hinblick auf einen möglichen Wiederausbau der Lenksäulenbaueinheit einen gravierenden Nachteil auf.

Bei der erstgenannten Variante, bei der die Befestigungsschraube vollständig aus dem Vormontagegewinde herausgetreten ist, ergibt sich die Schwierigkeit, daß ein Lösen der Befestigungsschraube zwangsläufig ein Zurückführen der Schraube in das erste Vormontagegewinde bedeutet. Diese Zurückführung ist bei der üblicherweise nur möglichen axialen Druckkrafteinleitung in Längsachse der Schraube sehr schwierig und unter normalen Demontagebedingungen nahezu gänzlich ausgeschlossen. Dies bedingt, daß der Ausbau der Lenksäule nur unter besonderen Schwierigkeiten möglich ist.

Bei der zweiten der oben beschriebenen Varianten ist das Vormontagegewinde nach dem Ersteinbau der Lenksäule oftmals bereits fast völlig zerstört. Dies bedeutet, daß nach einer Demontage der Lenksäule dieses Gewinde nachgeschnitten werden muß, da es nicht mehr nutzbar ist und die Lenksäule folglich in ihrer Montagefähigkeit eingeschränkt ist.

Aus der DE 38 25 177 A1 und DD 145 811 ist jeweils eine Befestigungsvorrichtung für die Festlegung einer ersten Baugruppe an einem zweiten Bauteil bekannt, das eine Befestigungsschraube, ein korrespondierendes erstes Vormontagegewinde an der ersten Baugruppe, in welchem die Befestigungsschraube nach der Vormontage festgelegt ist und ein Befestigungsgewinde an dem zweiten Bauteil zur Fixierung der ersten Baugruppe an dem zweiten Bauteil mittels der Befestigungsschraube aufweist, wobei die Befestigungsschraube über zwei Gewindebereiche zur Vormontage und zur Befestigung verfügt. Der zweite, zur Befestigung dienende, dem Schraubenkopf abgewandt liegende Gewindebereich weist dabei einen geringeren Durchmesser als der zur Vormontage dienende erste dem Schraubenkopf benachbarte Gewindebereich auf.

Aus der US 3,478,639 geht ferner eine Befestigungsschraube hervor, bei der das Vormontage- und das Befestigungsgewinde mit unterschiedlichen Steigungen versehen ist.

Aufgabe der vorliegenden Erfindung ist es daher, die oben beschriebenen Nachteile des Standes der Technik zu beseitigen und eine Befestigungsvorrichtung,bereitzustellen, welche eine problemlose Montage und Demontage einer Lenksäulenbaueinheit gewährleistet und sich gleichzeitig problemlos handhaben und kostengünstig herstellen läßt.

Diese Aufgabe wird erfindungsgemäß durch die Merkmale des Patentanspruches 1 gelöst.

Danach besteht eine erfindungsgemäße Befestigungsvorrichtung zur Festlegung einer Kraftfahrzeuglenksäulenbaueinheit aus:
- einer Befestigungsschraube mit einem ersten Gewindebereich und einem zweiten Gewindebereich,
- einer Lenksäulenbaueinheit mit einem Lenksäulengehäuse, in das ein zu dem Gewindebereich korrespondierendes Vormontagegewinde eingebracht ist,
- einem axial in einer Flucht mit dem Vormontagegewinde liegenden und im Vormontagezustand von diesem durch einen Zwischenspalt getrennten Befestigungsgewinde,
- einem U-förmigen Bügel, der mittels einer seiner beiden Schenkel an dem Lenksäulengehäuse festgelegt ist und an dessen anderem Schenkel das Befestigungsgewinde angeordnet ist, wobei nach der Endmontage zur Verbindung des Lenksäulengehäuses mit der Kraftfahrzeugkarosserie eine Lasche der Kraftfahrzeugkarosserie in den Zwischenspalt eingreift, die Befestigungsschraube eine Aussparung in der Lasche in Form eines Schlitzes oder einer Bohrung durchgreift und an der dem Vormontagegewinde abgewandten Seite der Lasche mit ihrem zweiten Gewindebereich in das Befestigungsgewinde derart eingreift, daß der durch die Schraubbewegung verformte Bügel mit seinen beiden Schenkeln an den Seitenflächen der Lasche der Kraftfahrzeugkarosserie anliegt und somit die Lasche einklemmt.

Das Befestigungsgewinde kann dabei gemäß einer vorteilhaften Weiterbildung in eine an dem Bügel angeschweißte Schweißmutter eingebracht sein.

Gemäß einer Ausgestaltung der Erfindung, wie sie in den Unteransprüchen beschrieben ist, wird vorgeschlagen, die Befestigungsschraube mit mindestens zwei Gewindebereichen zur Vormontage und zur Befestigung mit unterschiedlich großen Gewindesteigungen auszuführen, wobei das Vormontage- und Befestigungsgewinde an der ersten Baugruppe (und je nach konstruktiver Gestaltung am zweiten Bauteil) sowie die Gewindebereiche der Befestigungsschraube mit korrespondierenden unterschiedlichen Steigungen versehen sind und wobei der zweite zur Befestigung dienende, dem Schraubenkopf der Befestigungsschraube abgewandt liegende Gewindebereich einen geringeren Durchmesser als der zur Vormontage dienende erste, dem Schraubenkopf benachbarte Gewindebereich der Befestigungsschraube aufweist.

Diese spezielle konstruktive Gestaltung bewirkt, daß die Vormontage und Befestigungsgewinde bei einer gleichzeitigen Anordnung der Schraube in beiden Gewinden und einer entsprechenden Einschraubbewegung eine Relativbewegung aufeinander zu durchführen und so letztendlich Klemmkräfte bereitstellen können, die eine Fixierung der Lenksäulenbaueinheit an einem karosserieseitig festgelegten Zwischenblech erlauben. Sowohl die Gewindegänge des Befestigungsgewindes als auch des Vormontagegewindes bleiben beim Befestigungsvorgang vollkommen intakt, so daß eine problemlose Demontage der zusammengefügten Bauteile jederzeit einfach und kostengünstig durchführbar ist.

Je nach Anwendungsfall und räumlichen Gegebenheiten innerhalb der anzuwendenden Konstruktion kann die Befestigungsvorrichtung so gestaltet sein, daß die Gewindesteigung des ersten Gewindebereiches gegenüber der Gewindesteigung des zweiten Gewindebereiches der Befestigungsschraube größer oder kleiner ist. Diese Freiheit der konstruktiven Gestaltung erweitert die Einsatzmöglichkeiten der erfindungsgemäßen Befestigungsvorrichtung über das spezielle oben beschriebene Einsatzgebiet einer Lenksäulenbefestigung hinaus auf viele andere technische Gebiete.

Im folgenden wird ein Ausführungsbeispiel des Gegenstandes der Erfindung anhand der beigefügten Zeichnungen näher erläutert. Es zeigt:
- Figur 1: eine Ausführungsform der erfindungsgemäßen Befestigungsvorrichtung in Schnittdarstellung in vormontiertem Zustand;
- Figur 2: die erfindungsgemäße Befestigungsvorrichtung aus Figur 1 in Schnittdarstellung nach der Endmontage im fixierten Zustand.

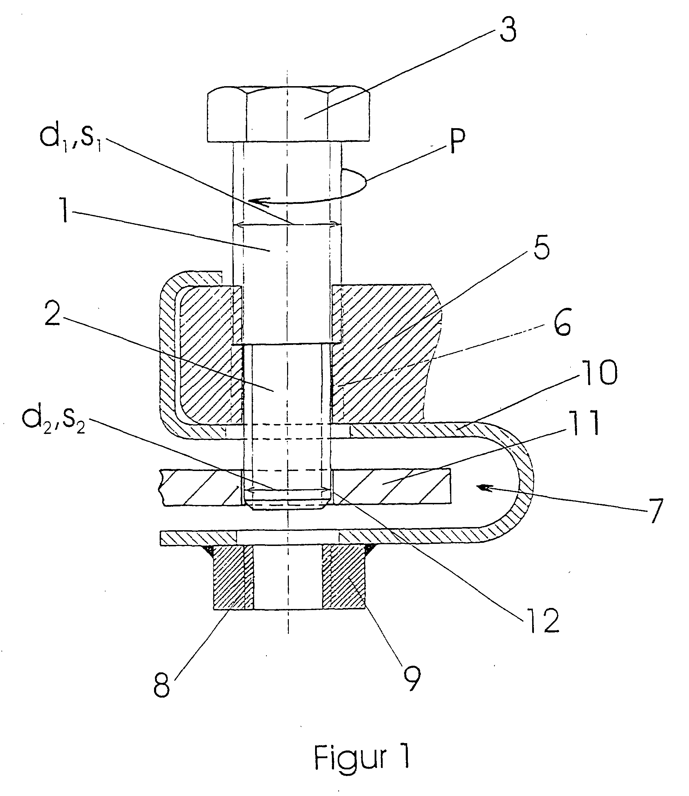

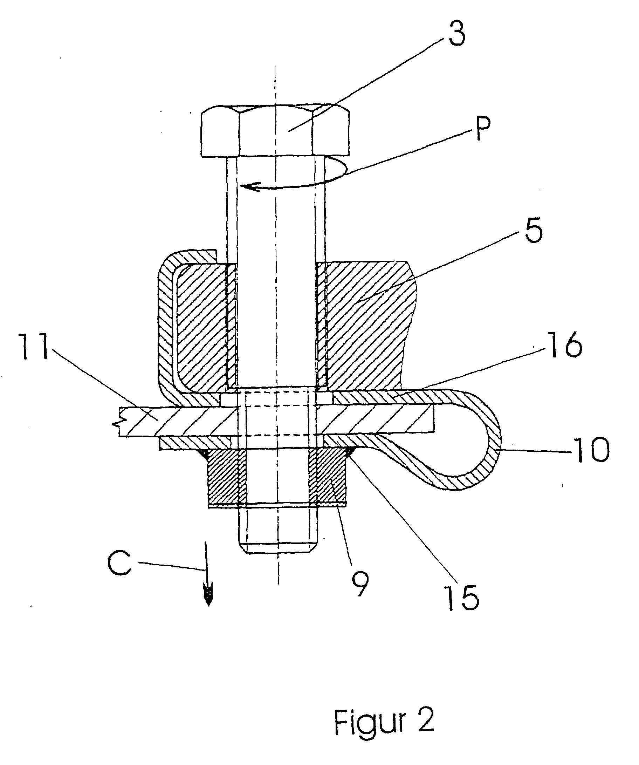

Die in den Figuren 1 und 2 dargestellte Befestigungsvorrichtung weist eine Befestigungsschraube 3 mit einem ersten Gewindebereich 1 und einem zweiten Gewindebereich 2 auf. Die Befestigungsvorrichtung dient zur Festlegung einer Kraftfahrzeuglenksäulenbaueinheit, wobei in den hier gewählten Darstellungen diese Lenksäulenbaueinheit nur auszugsweise dargestellt ist. Die Lenksäulenbaueinheit weist ein Lenksäulengehäuse 5 auf, in dem ein Vormontagegewinde 6 angeordnet ist. Axial in einer Flucht mit dem Vormontagegewinde 6 liegend und von diesem durch einen Zwischenspalt 7 getrennt ist ein Befestigungsgewinde 8 angeordnet. Das Befestigungsgewinde 8 befindet sich in einer Schweißmutter 9, die an einem U-förmigen Bügel 10 angeschweißt ist, der wiederum an dem oben erwähnten Lenksäulengehäuse 5 festgelegt ist.

Der Vormontagezustand der Lenksäulenbaueinheit sieht vor, daß die Befestigungsschraube 3 mit ihrem Gewindebereich 1 in das Vormontagegewinde 6 des Lenksäulengehäuses 5 eingeschraubt ist. Im Rahmen der Endmontage, bei der die Lenksäulenbaueinheit in ihrer endgültigen Position an der Kraftfahrzeugkarosserie festgelegt wird, greift eine Lasche 11 der Karosserie in den Zwischenspalt 7 des Lenksäulengehäuses ein. Die Befestigungsschraube 3 durchgreift hierbei eine Aussparung 12 in dieser Lasche 11 in Form eines Schlitzes oder einer Bohrung. An der dem Vormontagegewinde 6 abgewandten Seite der Lasche 11 greift die Befestigungsschraube 3 mit ihrem zweiten Gewindebereich 2 in das Befestigungsgewinde 8 ein. Der Gewindebereich 1 besitzt hierbei einen Durchmesser d₁ mit einer Steigung s₁.

Gegenüber den Abmaßen des Gewindebereiches 1 ist der Durchmesser d₂ des Befestigungsgewindebereiches 2 so bemessen, daß dieses das Vormontagegewinde 6 ohne Berührung der Wandflächen durchfahren kann. Die Steigung s₂ des Gewindebereiches 2 ist größer als die der Steigung s₁ des Gewindebereiches 1 gewählt. Aus dieser Konstellation ergibt sich die Wirkung, daß ein Einschrauben der Befestigungsschraube 3 in Richtung des Pfeiles P, wobei der Gewindebereich 1 in das Vormontagegewinde 6 und der Gewindebereich 2 in das Befestigungsgewinde 8 eingreift, dazu führt, daß sich die Schweißmutter 9 auf der Befestigungsschraube 3 so verschiebt, daß sich die Breite des Zwischenspaltes 7 verkleinert.

In der Figur 2 ist in Schnittdarstellung die Endposition der Befestigungsschraube 3 gezeigt. Der Bügel 10 hat sich durch die Bewegung der Schweißmutter 9 auf der Befestigungsschraube 3 soweit verformt, daß die beiden Schenkel 15 und 16 des Bügels 10 an die Seitenflächen der Lasche 11 der Karosserie zur Anlage gekommen sind und diese Lasche zwischen sich einklemmen. Das Lenksäulengehäuse 5 ist somit fest mit der Karosserie verbunden.

Der Lösevorgang zwischen Lenksäulengehäuse und Karosserie erfolgt in analoger Weise, indem die Befestigungsschraube 3 umgekehrt zur Pfeilrichtung P gedreht wird, wobei sich die Schweißmutter 9 und mit ihr der Schenkel 15 in Richtung des Pfeiles C auf der Befestigungsschraube 3 bewegen wird. Hierdurch wird die Klemmverbindung der beiden Schenkel 15 und 16 des Bügels 10 mit der Karosserielasche 11 aufgehoben und das Lenksäulengehäuse 5 kann demontiert werden.

Natürlich ist es auch denkbar, daß die Steigung s₂ des Gewindebereiches 2 kleiner als die Steigung s₁ des Gewindebereiches 1 gewählt wird, jedoch erfolgt die Klemmung zwischen der Lasche 11 und dem Lenksäulengehäuse 5 bzw.dem Bügel 10 hierbei analog zu der oben beschriebenen Art und Weise.

### Bezugszeichenliste:

- 1 -: Gewindebereich
- 2 -: Gewindebereich
- 3 -: Befestigungsschraube
- 5 -: Lenksäulengehäuse
- 6 -: Vormontagegewinde
- 7 -: Zwischenspalt
- 8 -: Befestigungsgewinde
- 9 -: Schweißmutter
- 10 -: Bügel
- 11 -: Lasche
- 12 -: Aussparung
- 15 -: Schenkel
- 16 -: Schenkel

## Patentansprüche

1. Befestigungsvorrichtung zur Festlegung einer Kraftfahrzeuglenksäulenbaueinheit, bestehend aus:
- einer Befestigungsschraube (3) mit einem ersten Gewindebereich (1) und einem zweiten Gewindebereich (2),
- einer Lenksäulenbaueinheit mit einem Lenksäulengehäuse (5), in das ein zu dem ersten Gewindebereich (1) korrespondierendes Vormontagegewinde (6) eingebracht ist,
- einem axial in einer Flucht mit dem Vormontagegewinde (6) liegenden und im Vormontagezustand von diesem durch einen Zwischenspalt (7) getrennten Befestigungsgewinde (8),
- einem U-förmigen Bügel (10), der mittels einer seiner beiden Schenkel an dem Lenksäulengehäuse (5) festgelegt ist und an dessen anderem Schenkel das Befestigungsgewinde (8) angeordnet ist, wobei nach der Endmontage zur Verbindung des Lenksäulengehäuses (5) mit der Kraftfahrzeugkarosserie eine Lasche (11) der Kraftfahrzeugkarosserie in den Zwischenspalt (7) eingreift, die Befestigungsschraube (3) eine Aussparung (12) in der Lasche (11) in Form eines Schlitzes oder einer Bohrung durchgreift und an der dem Vormontagegewinde (6) abgewandten Seite der Lasche (11) mit ihrem zweiten Gewindebereich (2) in das Befestigungsgewinde (8) derart eingreift, daß der durch die Schraubbewegung verformte Bügel (10) mit seinen beiden Schenkeln (15 und 16) an den Seitenflächen der Lasche (11) der Kraftfahrzeugkarosserie anliegt und somit die Lasche (11) einklemmt.

2. Befestigungsvorrichtung zur Festlegung einer ersten Baugruppe an einem zweiten Bauteil nach Anspruch 1,
**dadurch gekennzeichnet, daß** das Befestigungsgewinde (8) in eine an dem Bügel (10) angeschweißte Schweißmutter (9) eingebracht ist.

3. Befestigungsvorrichtung zur Festlegung einer ersten Baugruppe an einem zweiten Bauteil nach Anspruch 1 oder 2,
**dadurch gekennzeichnet, daß** die Befestigungsschraube (3) mindestens zwei Gewindebereiche (1, 2) zur Vormontage und zur Befestigung mit unterschiedlich großen Gewindesteigungen aufweist, wobei das Vormontage- (6) und das Befestigungsgewinde (8) sowie die Gewindebereiche (1, 2) mit korrespondierenden unterschiedlichen Steigungen versehen sind und daß der zweite zur Befestigung dienende dem Schraubenkopf abgewandt liegende Gewindebereich (2) einen geringeren Durchmesser als der zur Vormontage dienende erste dem Schraubenkopf benachbarte Gewindebereich (1) aufweist.

4. Befestigungsvorrichtung zur Festlegung einer ersten Baugruppe an einem zweiten Bauteil nach Anspruch 1, 2 oder 3,
**dadurch gekennzeichnet, daß**
die Gewindesteigung des ersten Gewindebereiches (1) größer ist als die Gewindesteigung des zweiten Gewindebereiches (2).

5. Befestigungsvorrichtung zur Festlegung einer ersten Baugruppe an einem zweiten Bauteil nach einem der Ansprüche 1, 2 oder 3,
**dadurch gekennzeichnet, daß**
die Gewindesteigung des ersten Gewindebereiches (1) kleiner ist als die Gewindesteigung des zweiten Gewindebereiches (2).

## Claims

1. Fastening apparatus for fixing a motor vehicle steering column unit, comprising:
- a fastening screw (3) having a first threaded region (1) and a second threaded region (2),
- a steering column unit having a steering column housing (5), into which a preassembly thread (6) matching the first threaded region (1) is introduced,
- a fastening thread (8) lying axially in alignment with the preassembly thread (6) and separated from the latter in the preassembly state by an intermediate gap (7),
- a U-shaped bow (10), which is fixed by means of one of its two limbs to the steering column housing (5) and on the other limb of which the fastening thread (8) is disposed, wherein after final assembly for connection of the steering column housing (5) to the motor vehicle body a strap (11) of the motor vehicle body engages into the intermediate gap (7), the fastening screw (3) penetrates a recess (12) in the strap (11) in the form of a slot or bore and on the side of the strap (11) remote from the preassembly thread (6) engages with its second threaded region (2) into the fastening thread (8) in such a way that the bow (10), which has been deformed by the screwing movement, lies with its two limbs (15 and 16) against the lateral surfaces of the strap (11) of the motor vehicle body and hence clamps the strap (11) in between them.

2. Fastening apparatus for fixing a first subassembly to a second component according to claim 1,
**characterized in that** the fastening thread (8) is introduced into a welding nut (9), which is welded on the bow (10).

3. Fastening apparatus for fixing a first subassembly to a second component according to claim 1 or 2,
**characterized in that** the fastening screw (3) comprises at least two threaded regions (1, 2) for preassembly and for fastening that have thread leads of differing size, wherein the preassembly thread (6) and the fastening thread (8) as well as the threaded regions (1, 2) are provided with corresponding different leads and that the second threaded region (2) used for fastening and lying remote from the screw head has a smaller diameter than the first threaded region (1) used for preassembly and lying adjacent to the screw head.

4. Fastening apparatus for fixing a first subassembly to a second component according to claim 1, 2 or 3,
**characterized in that**
the thread lead of the first threaded region (1) is larger than the thread lead of the second threaded region (2).

5. Fastening apparatus for fixing a first subassembly to a second component according to claim 1, 2 or 3,
**characterized in that**
the thread lead of the first threaded region (1) is smaller than the thread lead of the second threaded region (2).

## Revendications

1. Dispositif de fixation pour la fixation d'un bloc de colonne de direction de véhicule automobile constitué de :
- une vis de fixation (3) avec une première zone filetée (1) et une deuxième zone filetée (2),
- un bloc de colonne de direction avec un boîtier de colonne de direction (5) dans lequel est pratiqué un filetage de pré-montage (6) correspondant à la première zone filetée,
- un filetage de fixation (8) aligné axialement avec le filetage de pré-montage (6) et séparé de celui-ci, à l'état pré-monté, par une fente intermédiaire (7),
- un étrier (10) en U qui est fixé au boîtier de colonne de direction (5), au moyen de l'une de ses deux branches, et sur l'autre branche duquel est disposé le filetage de fixation (8), après le montage définitif, pour la liaison du boîtier de colonne de direction (5) avec la carrosserie du véhicule automobile, une patte (11) de la carrosserie du véhicule automobile s'engageant dans la fente intermédiaire (7), la vis de fixation (3) traversant un évidemment (12) de la patte (11) sous la forme d'une fente ou d'un alésage, et s'engageant dans le filetage de fixation (8), sur le côté de la patte (11) tourné à l'opposé du filetage de pré-montage (6), par sa deuxième zone filetée (2), de manière que l'étrier (10) déformé par le vissage s'applique par ses deux branches (15) et (16) contre les surfaces latérales de la patte (11) de la carrosserie du véhicule automobile, et serre ainsi la patte (11).

2. Dispositif de fixation pour la fixation d'un premier ensemble structurel sur un deuxième élément structurel selon la revendication 1,
**caractérisé en ce que** le filetage de fixation (8) est pratiqué dans un écrou à souder (9) soudé sur l'étrier (10).

3. Dispositif de fixation pour la fixation d'un premier ensemble structurel sur un deuxième élément structurel selon la revendication 1 ou 2,
**caractérisé en ce que** la vis de fixation (3) présente au moins deux zones filetées (1, 2) pour le pré-montage et pour la fixation avec des pas de filetage différents, le filetage de pré-montage (6) et le filetage de fixation (8) ainsi que les zones filetées (1, 2) étant pourvus de pas différents correspondants, et **en ce que** la deuxième zone filetée (2) servant à la fixation et tournée à l'opposé de la tête de vis, présente un diamètre plus petit que la première zone filetée (1), voisine de la tête de vis, servant au pré-montage.

4. Dispositif de fixation pour la fixation d'un premier ensemble structurel sur un deuxième élément structurel selon la revendication 1, 2 ou 3,
**caractérisé en ce que** le pas du filetage de la première zone filetée (1) est plus grand que le pas du filetage de la deuxième zone filetée (2).

5. Dispositif de fixation pour la fixation d'un premier ensemble structurel sur un deuxième élément structurel selon l'une des revendications 1, 2 ou 3,
**caractérisé en ce que** le pas du filetage de la première zone filetée (1) est plus petit que le pas du filetage de la deuxième zone filetée (2).
